# EUROPEAN PATENT SPECIFICATION

(11) **EP 0 953 478 B1**
(45) Date of publication and mention of the grant of the patent: **26.08.2009**
(21) Application number: 99850065.6
(22) Date of filing: 15.04.1999
(51) Int. Cl.: B60P 1/02, B60P 3/04

(54) **An arrangement for facilitating the transportation of goods in a truck-carried container**
Vorrichtung zum Erleichtern des Transports von Gütern in einem Container auf einem Lastkraftwagen
Arrangement pour faciliter le transport de marchandises dans un conteneur sur un camion

(30) Priority: 15.04.1998 SE 9801302
(43) Date of publication of application: 03.11.1999
(73) Proprietor: Sandström, Dan, 975 91 Lulea (SE)
(72) Inventor: Sandström, Dan, 975 91 Lulea (SE)
(74) Representative: Örtenblad, Bertil Tore

(56) References cited:
- EP-A- 0 618 130
- EP-A- 0 624 491
- GB-A- 1 218 054
- GB-A- 2 154 184
- GB-A- 2 284 182

## Description

### FIELD OF INVENTION

The present invention relates to an arrangement for facilitating the transportation of goods in a truck-carried container.

More specifically, the invention relates to an arrangement for facilitating the loading, the transportation and the unloading of goods into and from a truck-carried container. By container is meant in this document a closed receptacle or "van-like" structure which comprises solid walls, doors and roof and an openable door or doors and which is carried on/and or can be built-up/erected on the chassis of a truck or trailer.

### DESCRIPTION OF THE BACKGROUND ART

It is known to provide such containers with an intermediate floor, so as to be able to store goods in the container on two storeys. It is also known to enable the intermediate floor to move vertically. Such intermediate floors are moved with the aid of hydraulic piston-cylinder devices, which function to move the floor vertically through the medium of a system of wires or Bowden cables. Such arrangements are expensive.

There is also from e.g. EP 0 618 130 A1 known an arrangement for loading, transporting, and unloading goods onto and out of a truck-mounted container including a vertically moveable intermediate floor, which intermediate floor is divided into two or more floor sections in the longitudinal direction of the container, wherein the intermediate floor sections are moveable vertically along guide rails fitted to the inside of the long container sides, from a lower load carrying position to an upper position below the roof of the container.

### PROBLEMS

One problem relating to the transportation of baskets, trays, boxes etc., used to transport foodstuffs, groceries, and like goods, is that the baskets, e.g. steel baskets, have a height of about 1.6 metres. When the intermediate floor is immovable and is located above the fixed floor at a height that only slightly exceeds the height of a basket, it is necessary for personnel to work in a stooping position when loading and unloading the container onto and from the level beneath the intermediate floor. The reason why the intermediate floor cannot be placed at a higher level above the fixed floor is because the container as a whole would then become too high if baskets or crates were also to be loaded on the intermediate floor. The container would then become too high for the truck to pass beneath bridges and viaducts, i.e. it would exceed the maximum permitted height of 4.5 metres. In an attempt to solve this problem concerning the working comfort of personnel, there has been proposed a solution with which the container is constructed so that the upper part of said container, and therewith also the roof, can be raised telescopically relative to the remainder of the container. The intermediate floor can be raised and lowered in this way. When goods are to be loaded on the fixed floor, the intermediate floor is raised so that personnel can work while standing upright. When loading goods onto the intermediate floor, the container is raised accordingly. The truck is driven with the container in a lowered state, so as not to exceed the maximum permitted height of 4.5 metres. Such truck containers are extremely expensive and complicated.

With the arrangement known from the above mentioned EP 0 618 130 A1 some of these problems can be solved, but it is still a manual, heavy work to move the intermediate floors up and down the guide rails, one side at the time, and latched in position.

### OBJECT OF THE INVENTION

An object of the present invention is to provide an extremely simple truck-carried container as hereinbefore described with which the aforesaid problems concerning the working comfort of personnel are avoided. Another object is to provide such a container with which the use of expensive and space-consuming intermediate floor drive means are avoided. The object is further to provide an arrangement that can be completely handled by mechanical means, such as by a forklift truck.

### SUMMARY OF THE INVENTION

The present invention thus relates to an arrangement for facilitating the loading, transporting, and unloading goods into and out of a truck-carried container that includes an intermediate vertically movable floor, which intermediate floor is divided into two or more sections in the longitudinal direction of the container, wherein each intermediate-floor section can be moved vertically along guide rails fitted to the inside of the long sides of said container from a bottom limit position to a top limit position, and wherein the arrangement includes no drive means for moving said sections. According to the invention the arrangement includes a locking device at said top limit position, said locking device being constructed so that each alternate time a respective intermediate floor section reaches its upper limit position, said locking device will take a locking mode and therewith lock said floor section in its upper limit position, and each other time the section reaches its upper limit position said locking device will take a non-locking mode.

### BRIEF DESCRIPTION OF THE DRAWINGS

The invention will now be described in more detail with reference to exemplifying embodiments thereof and also with reference to the accompanying drawings, in which
- Figure 1a illustrates a truck-carried container from above, with the container roof removed;
- Figure 1b is a rear view of a truck-carried container, with rear doors open;
- Figure 2 shows part of the Figure 1 illustration in larger scale;
- Figure 3 is a sectional view taken on the line A-A in Figure 2;
- Figure 4 shows part of a guide rail;
- Figure 5 is a sectional view taken on the line B-B in Figure 3;
- Figures 6a, 6b , 7a, 7b, 8a and 8b are respective illustrations of the various states of a locking device; and
- Figure 9 illustrates the extension of a groove or channel in one sleeve of the locking device.

### DETAILED DESCRIPTION OF PREFERRED EMBODIMENTS

The present invention relates to an arrangement for loading, transporting, and unloading goods into and out of a truck-carried container or "van-like" structure 1, said container including an intermediate floor that can move vertically. Figure la shows a truck-carried container from above, with the container roof removed for illustration purposes. Figure lb is a rear view of the container and shows rear container doors in an opened position.

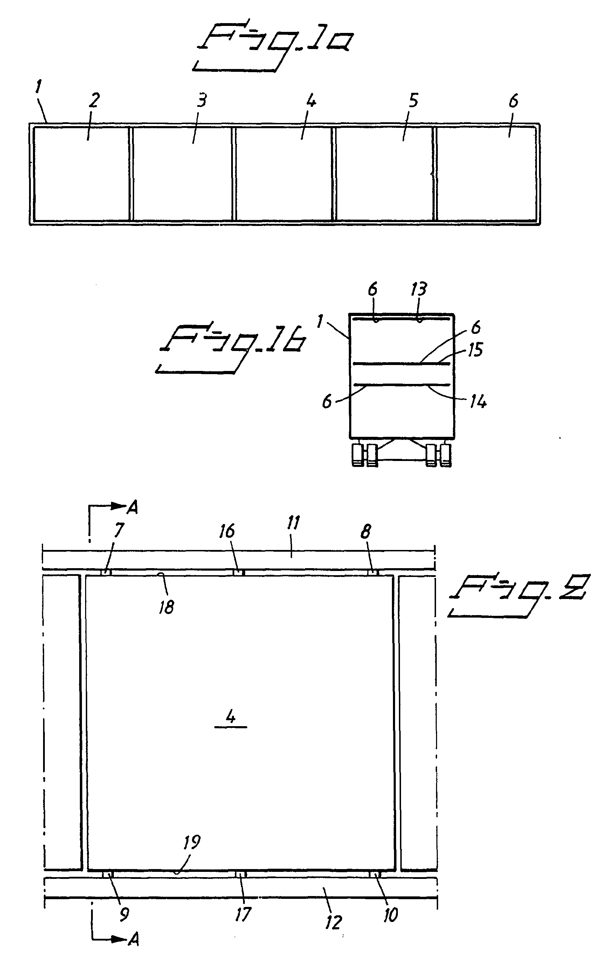

In accordance with the invention, the intermediate floor is divided into several sections 2-6, in the longitudinal direction of the container. Each floor section 2-6 can be moved vertically along guide rails 7-10 fitted to the inside of the long container sides 11, 12. Suitably, one guide rail 7-10 will be fitted close to respective corners of the sections. Each section can be moved from a lower limit position to an upper limit position 13, see Figure 1b. In addition to showing the upper limit position 13, Figure 1b also shows a suitable lower limit position, referenced 14. Reference numeral 15 identifies a floor section located in a lower limit position that is higher than the lower limit position referenced 14.

It will be noted that the arrangement does not include drive means for moving the floor sections vertically. As described below, the sections are moved vertically with the aid of an external lifting and lowering device.

The inventive arrangement also includes a locking device 16, 17 at respective upper limit positions. The locking devices are fitted on the inside of the long container sides 11, 12. One locking device is conveniently fitted on the short side 18, 19 of each floor section, where it is placed for coaction with the centre of the section concerned, on its short side.

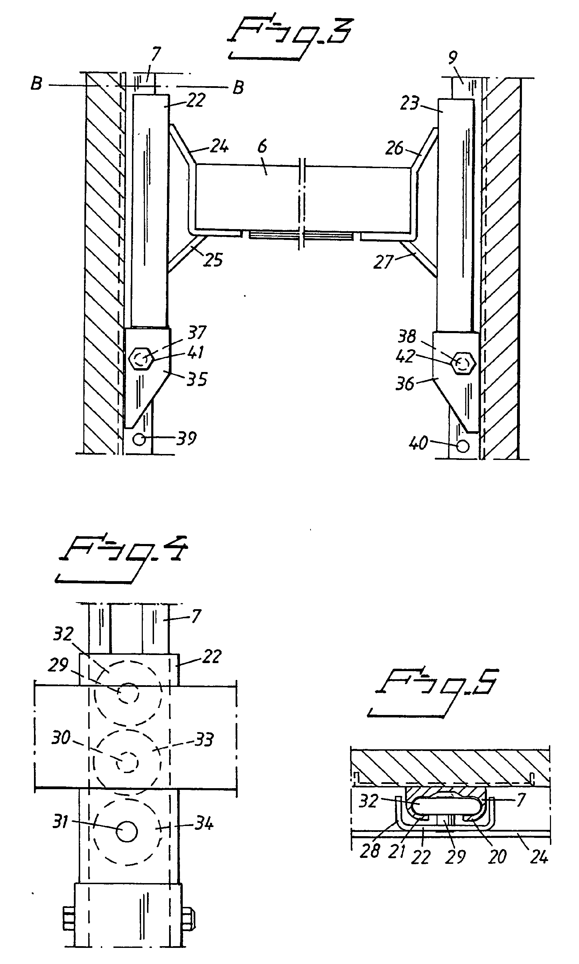

Figure 5 is a cross-sectional view of a guide rail 7, which comprises a U-shaped profile having inwardly turned, free legs 20, 21. The guide rails 7 coact with runners or travellers 22 and 23, each of which coacts with a respective guide rail 7, 9, as shown in Figure 3. The runners, or travellers, are fastened to respective floor sections by means of struts 23, 24, 25, 26, 27. Each runner includes a U-shaped profile 28 which partially surrounds its guide rails 7 and which has a limited extension. Mounted in the profile 28 are three axles 29-31, each carrying a ball bearing 32-34. The ball bearings run in a respective guide rail, as shown in Figure 5.

According to one preferred embodiment, the locking device 16 is designed to take a locking mode every alternate time a section 6 of an intermediate floor reaches its upper limit position 13 and therewith lock said section 6 in said upper limit position, and to take a non-locking mode each alternate time the section 6 reaches its upper limit position. The upper limit position 13 will conveniently be placed as high as possible.

According to one preferred embodiment of. the invention, the lower limit position is variable. The lower limit position is preferably defined by mechanical stop means 35, 36 that coact with the guide rails 7, 9; see Figure 3. The stop means may have the form of bolts 41, 42 that are screwed to respective guide rails 7, 9 through holes 37, 38, 39, 40.

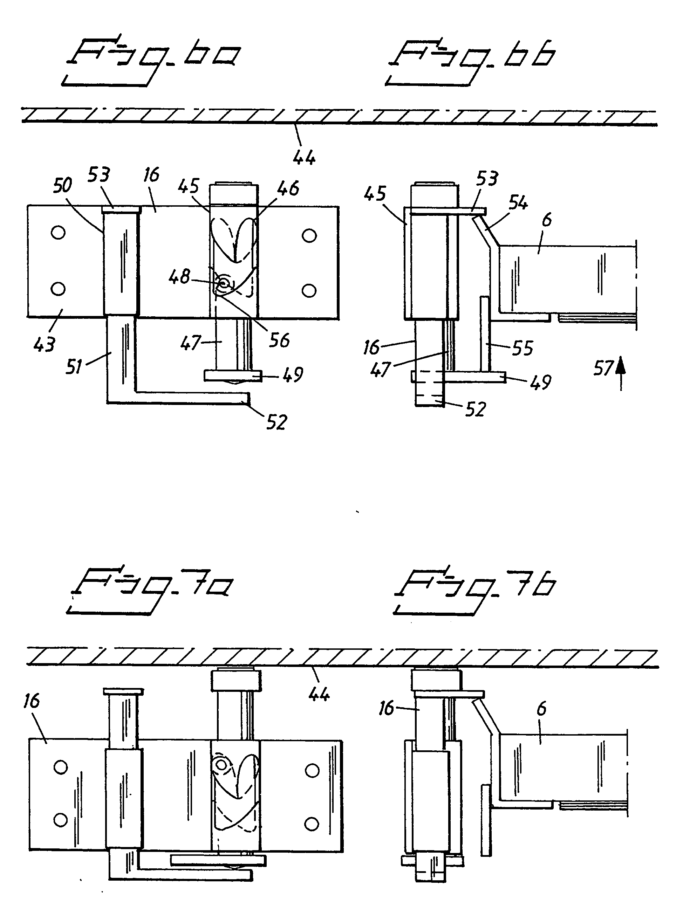

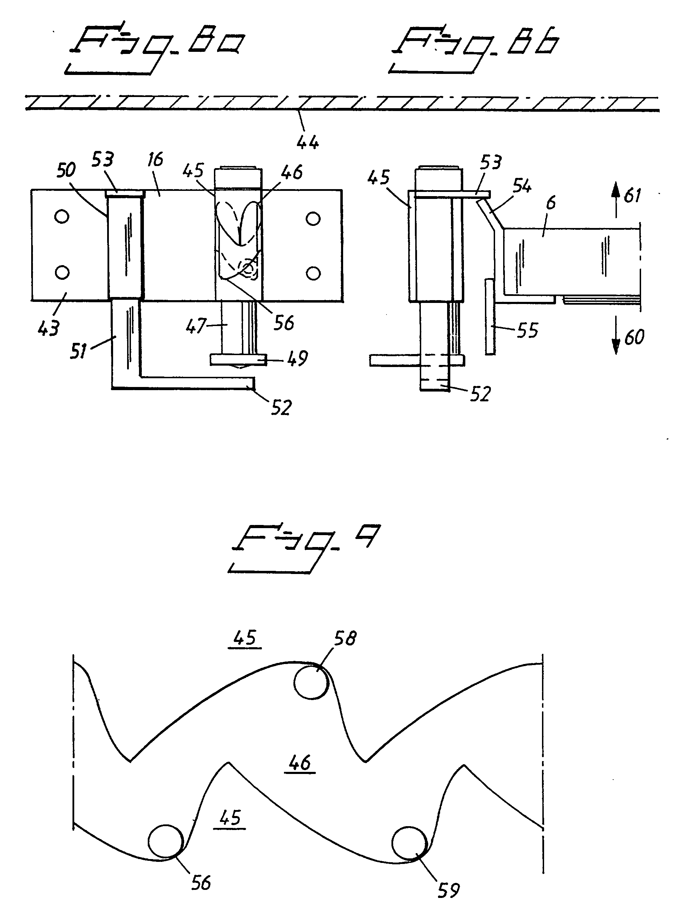

Figures 6a-8b and Figure 9 illustrate a preferred embodiment of the locking device 16. The locking device is a mechanical pivotal catch means and comprises a plate 43 which is fitted to the inside of a respective container wall relatively close to the container roof 44. The locking device also includes a sleeve 45 which is fastened to the plate 43 and which includes a circumferentially extending groove 46. Figure 9 shows the groove 46 in an extended state, i.e. a state in which the cylinder wall of the sleeve is folded out to a flat state. The sleeve 45 houses a vertically moveable, cylindrical peg 47 that has a radially projecting pin 48. A horizontal latch arm 49 is fitted to the bottom of the peg 47.

The locking device also includes an operating part which comprises a second sleeve 50 and a second peg 51 which extends in said second sleeve and which is non-rotatable relative to said sleeve. Fastened to the bottom of the peg 51 is a first horizontal operating arm 52 which is intended to act against the latch arm 49 in a position beneath the first mentioned peg 47. A second horizontal operating arm 53 is fitted to the top of the peg 51. This second arm 53 is intended to coact with a strut 54 fastened to the intermediate floor section 6 concerned.

Figures 6a and 6b show the latch arm 49 in an outwardly swung and therewith locking position. Figure 6a shows the locking device from the right in Figure 6b. A carrier strut 55 abuts the latch arm 49 from above in the locking mode of the device, one such strut being fastened to each respective floor section 6.

The locking device works in the following way. In the locking mode shown, shown in Figure 6b, the pin 48 is located in a valley 56 in the groove 46 as seen in Figures 6a and 9. As the floor section 6 moves upwards in Figure 6b, in the direction of arrow 57, the strut 54 will lift the second operating arm 53 and therewith also the peg 51 and the first operating arm 52. The first peg 47 is therewith lifted and the pin 48 runs in the groove 46 to the position 58 in Figure 9. The raised position is shown in Figures 7a and 7b. When the floor section 6 is then lowered, the raised parts are lowered to the position shown in Figures 8a and 8b as the pin moves in the groove from position 58 to position 59. Thus, as the floor section is raised and lowered, the peg 47 will rotate one-half of a revolution as a result of the coaction of pin 48 with the groove 46 in the sleeve 45. Rotation of the peg 47 through one-half of a turn will have caused the latch arm 49 to move from its locking position shown in Figure 6b to its non-locking position shown in Figure 8b. In this latter position, the floor section 6 can be moved down past the locking device, as indicated by the arrow 60.

When the floor section 6 again moves upwards, as indicated by the arrow 61, the locking device will be lifted up in the aforedescribed manner and the section then lowered slightly. During this lifting and lowering movement, the peg 47 will again be rotated in the sleeve 45 in response to the combined action of the pin 48 and the groove 46, such that the pin will again take the position 56. The latch arm 49 is therewith rotated from its non-locking position to its locking position.

As before mentioned, the arrangement includes no drive means for moving the floor sections 6 vertically. It is envisaged that the intermediate floor sections will be manoeuvred with the aid of an externally placed lifting device that acts between the fixed container floor and the undersides of respective floor sections 6.

According to one preferred embodiment, the length of respective intermediate floor sections 6 is no greater in the longitudinal direction of the container than a length which will enable the floor sections 6 to be moved vertically one at a time with the aid of a forklift truck. According to another embodiment, each intermediate floor section will have a length which is shorter than about 3 metres in the longitudinal direction of the container.

When the intermediate floor sections 6 are raised and lowered by means of a forklift truck, the forklift truck used to load and unload goods onto and out of the container can also be used to manoeuvre said sections. Because the locking device is designed to take a locking mode every other time a respective section reaches its upper limit position and therewith locks said floor section in said position, and to take a non-locking mode each other time said section reaches its upper limit, the truck driver need not leave his/her driving place in order to move the sections to their required positions.

Naturally, other appropriate lifting devices can be used as an alternative to a forklift truck. For instance, an electrically operated, telescopic prop means could be used to this end. Such prop means could be made available at loading and unloading sites.

When loading and unloading goods onto and from the fixed container floor, the intermediate fork sections will be in their upper limit positions. This means that goods will be loaded onto and unloaded from an intermediate floor section 6 prior to loading goods onto and unloading goods from the underlying fixed floor. The working personnel will thus always be able to stand fully upright, without the container being higher than is conventional.

It will be evident from the aforegoing that the present invention solves the problems mentioned in the introduction.

Although the invention has been described with reference to a number of exemplifying embodiments thereof, it will be understood that modifications can be made without departing from the concept of the invention. For instance, the division of the intermediate floor into sections can be varied and the guide rails and the runners and mechanical stops may be different to those described while having the same function.

The locking device may also be modified, while retaining its function.

It will therefore be understood that the invention is not restricted to said described and illustrated embodiments and that modifications and variations can be made within the scope of the accompanying Claims.

## Claims

1. An arrangement for loading, transporting, and unloading goods onto and out of a truck-mounted container (1) that includes a vertically moveable intermediate floor, which intermediate floor is divided into two or more floor sections (1-6) in the longitudinal direction of the container, and wherein each intermediate floor section (2-6) is moveable vertically along guide rails (7-10) fitted to the inside of the long container sides (11, 12), from a lower limit position (14) to an upper limit position (13), and wherein the arrangement includes no floor section drive means **characterised in that** said arrangement includes a locking device (16, 17) at the upper limit position, said locking device (16, 17) being constructed so that each alternate time a respective intermediate floor section (2-6) reaches its upper limit position, said locking device will take a locking mode and therewith lock said floor section in its upper limit position, and each other time the section reaches its upper limit position said locking device will take a non-locking mode.

2. An arrangement according to Claim 1, **characterised in that** the length of the intermediate floor sections (2-6) is no greater in the longitudinal direction of the container (1) than that length at which respective sections (2-6) can be moved vertically one at a time with the aid of a forklift truck.

3. An arrangement according to Claim 2, **characterised in that** each intermediate floor section (1-6) is shorter than about three metres in length in the longitudinal direction of the container.

4. An arrangement according to any one of the preceding Claims, **characterised in that** said lower limit position is determined by mechanical stops (35, 36) that co-act with said guide rails (7-10).

## Patentansprüche

1. Anordnung zum Laden, Transportieren und Entladen von Waren auf einen und von einem auf einem Lastkraftwagen montierten Transportbehälter (1), der einen vertikal beweglichen Zwischenboden beinhaltet, wobei dieser Zwischenboden in zwei oder mehr Bodenteilstücke (1-6) in Längsrichtung des Transportbehälters unterteilt ist, und wobei jedes Zwischenboden-Teilstück (2-6) vertikal entlang Führungsschienen (7-10), die an der Innenseite der langen Transportbehälterseiten (11, 12) angebracht sind, bewegbar ist, und zwar von einer unteren Grenzposition (14) in eine obere Grenzposition (13), und wobei die Anordnung keine Bodenteilstück-Antriebseinrichtung beinhaltet, **dadurch gekennzeichnet, dass** die Anordnung eine Verriegelungsvorrichtung (16, 17) an der oberen Grenzposition beinhaltet, wobei die Verriegelungsvorrichtung (16, 17) so konstruiert ist, dass jedes zweite Mal wenn ein jeweiliges Zwischenbodenteilstück (2-6) seine obere Grenzposition erreicht, die Verriegelungsvorrichtung einen Verriegelungsmodus einnimmt und damit das Bodenteilstück in seiner oberen Grenzposition verriegelt, und jedes andere Mal wenn das Teilstück seine obere Grenzposition erreicht, die Verriegelungsvorrichtung einen Nicht-Verriegelungsmodus einnimmt.

2. Anordnung nach Anspruch 1, **dadurch gekennzeichnet, dass** die Länge der Zwischenboden-Teilstücke (2-6) in Längsrichtung des Transportbehälters (1) nicht größer als die Länge ist, bei der jeweilige Teilstücke (2-6) jeweils einzeln mithilfe eines Gabelstaplers in vertikaler Richtung bewegt werden können.

3. Anordnung nach Anspruch 2, **dadurch gekennzeichnet, dass** jedes Zwischenbodenteilstück (1-6) in Längsrichtung des Transportbehälters eine Länge von weniger als ca. 3 Metern hat.

4. Anordnung nach einem der vorhergehenden Ansprüche, **dadurch gekennzeichnet, dass** die untere Grenzposition durch mechanische Anschläge (35, 36) bestimmt ist, die mit den Führungsschienen (7-10) zusammenarbeiten.

## Revendications

1. Installation pour charger et transporter, décharger des marchandises dans ou à partir d'un conteneur (1) installé dans un camion et comportant un plancher intermédiaire mobile verticalement,
ce plancher intermédiaire étant divisé en deux ou plusieurs sections de plancher (1-6) dans la direction longitudinale du conteneur, et
chaque section de plancher intermédiaire (2-6) est mobile verticalement le long de rails de guidage (7-10) installés à l'intérieur des côtés longitudinaux du conteneur (11, 12) entre une position limite basse (14) et une position limite haute (13), et
l'installation ne comporte pas de moyen d'entraînement de la section de plancher,
**caractérisée en ce que**
l'installation comporte un dispositif de verrouillage (16, 17) dans sa position limite supérieure,
le dispositif de verrouillage (16, 17) étant réalisé de façon qu'à chaque alternance d'instants, une section de plancher intermédiaire (2-6) respective atteigne sa position limite supérieure,
le dispositif de verrouillage passant en mode de verrouillage et verrouillant ainsi la section de plancher dans sa position limite supérieure et à chaque autre instant, lorsque la section atteint sa position limite supérieure, le dispositif de verrouillage se met en mode de non verrouillage.

2. Dispositif selon la revendication 1,
**caractérisé en ce que**
la longueur des sections de plancher intermédiaires (2-6) n'est pas plus grande dans la direction longitudinale du conteneur (1) que la longueur des sections respectives (2-6) qu'un chariot élévateur à fourche peut déplacer verticalement individuellement.

3. Dispositif selon la revendication 2,
**caractérisé en ce que**
chaque section de plancher intermédiaire (1-6) est d'une longueur inférieure à environ trois mètres dans la direction longitudinale du conteneur.

4. Dispositif selon l'une des revendications précédentes,
**caractérisé en ce que**
la position limite inférieure est déterminée par des butées mécaniques (35, 36) coopérant avec les rails de guidage (7-10).
